# EUROPEAN PATENT SPECIFICATION

(11) **EP 2 835 173 B1**
(45) Date of publication and mention of the grant of the patent: **14.08.2019**
(21) Application number: 12873836.6
(22) Date of filing: 03.04.2012
(51) Int. Cl.: B01D 53/85, F24F 3/16, A01G 9/02

(54) **PLANAR BIOFILTRATION SYSTEM**
PLANARES BIOFILTRATIONSSYSTEM
SYSTÈME PLAN DE BIOFILTRATION

(43) Date of publication of application: 11.02.2015
(73) Proprietor: Domínguez Rojas, Óscar, 28021 Madrid (ES)
(72) Inventor: Domínguez Rojas, Óscar, 28021 Madrid (ES)
(74) Representative: González López-Menchero, Álvaro Luis
(86) International application number: PCT/ES2012/070222
(87) International publication number: WO 2013/150161

(56) References cited:
- WO-A1-2009/078131
- WO-A2-03/059037
- ES-A1- 2 277 762
- ES-A1- 2 334 968
- GB-A- 2 266 647
- JP-A- 2008 029 322
- US-A1- 2007 094 927
- US-A1- 2011 030 274

## Description

### TECHNICAL FIELD

The object of the present invention is a planar biofiltration system based on the detoxification capacity of the rhizosphere of higher plants.

The rhizosphere is a part of the soil close to the roots where a dynamic interaction with microorganisms takes place. The chemical and biological characteristics of the rhizosphere are evident in a portion of barely 1 mm thick from the roots.

In the broadest sense, the rhizosphere can be considered the portion of soil where plant roots are found, since it is an area having a wide range of physical and chemical relationships that affect the structure of the soil and the organisms living therein, providing the soil with different properties.

The rhizosphere provides a complex and dynamic microenvironment where root-associated bacteria and fungi form unique communities with considerable potential for detoxifying harmful organic compounds.

The present invention is characterized by the special constructive features of the elements forming part of the system, as well as their arrangement, to promote the action of air contamination removal by the microorganisms present in the rhizosphere of plants.

Therefore, the present invention is encompassed within the scope of biofiltration systems.

### PRIOR ART

A recent study by NASA has demonstrated that the rhizosphere of plants plays a significant role in purifying certain air contaminants. Some microorganisms that are capable of absorbing substances harmful to health live in said rhizosphere generally in a symbiotic manner.

In the state of the art is known the plant cultivating structure disclosed in WO2009078131, which protects lawn from the external force, which improves a working efficiency and which can be used in combination with a commercially available lawn material, and a laying assembly using the plant-cultivating structure. The plant-cultivating structure comprises a first member and a second member. The first member includes a first board, a through hole and a pillar portion. The through hole extends through from one face to the other of the first board. The pillar portion is protruded from the other face of the first board. The second member includes a second board, one face of which is arranged to confront the other face of the first board, thereby to support the leading end portion of the pillar portion.

It is also known document US2007094927, which discloses a vegetation pod for creating a green roof is disclosed. The vegetation pod includes vegetation that absorbs and stores water. The roots of the vegetation grow in a growing media that rests atop a layer of filter fabric.

In document JP2008029322 it is disclosed a planting panel preventing a plant from falling down from a wall surface by the weight of the plant and from peeling off from a base on which the plant is planted.

Another document Known from the state of the are is the document ES2334968 A1 which discloses a protective enclosure for facades of buildings that is constituted on the basis of modular vertical gabions, carriers of rupicolous plates , supports for fixing the gabions and a layer of thermally insulating material disposed between the wall of the facade and the vertical gabions.

Other biofiltration systems with aspects susceptible of further improvement are known in the state of the art:
- On one hand, they do not use natural substrates, so they do not promote the development of associated microorganisms.
- On the other hand, they use fertilizers interfering with microbial development.
- Most of the similar systems are hydroponic systems that depend on constant water flow and fertilizers with higher resource consumption.
- Most systems are not modular, which means greater difficulty in assembling them
- Other structures are not three-dimensional, so they have deformations.

Therefore, the object of the present invention is to develop a planar biofiltration system to promote the vertical placement thereof, overcoming the mentioned drawbacks, developing a system such as that described below the essential features of which are included in claim 1.

### DISCLOSURE OF THE INVENTION

The planar biofiltration system is characterized in that it comprises:
- A first three-dimensional structure made of polyethylene, polypropylene or any other material that is filled with a substrate.
- A hydrophilic fabric that closes the sides and the base of the first three-dimensional structure.
- A second three-dimensional structure made of polyethylene, polypropylene or any other stable material with support or gripping elements depending on the subsequent placement thereof, secured to the assembly formed by the first three-dimensional structure and the hydrophilic fabric covering the base and sides of the first three-dimensional structure.

Wherein the two three-dimensional structures are attached to one another by means of screws or rivets or the like.

The three-dimensional structures are hollow structures leaving several inner spaces allowing, on one hand, the substrate to be arranged inside the first three-dimensional structure, whereas, the second structure allows the passage of air.

The substrate arranged in the first three-dimensional structure allows the development of a root system with the presence of substances or elements promoting the development of specific or universal microorganisms.

The hydrophilic fabric makes the system different from any other similar system. This fabric allows watering to be distributed uniformly throughout the entire module from back to front by capillarity. The placement of this fabric and its shape allows "hanging" the substrate and having more exposed surface.

There can be arranged complementarily on the outer face of the three-dimensional structure housing the substrate pockets suspended from the structure in which plants can be arranged.

The system also has watering means comprising an exudative watering tube, allowing more homogeneous watering and with countless pores, whereby obstruction of the watering tube is prevented.

This system aims to establish the bases for creating structures that allow exposing the surface of the rhizosphere to the contaminated air as much as possible. To achieve this, these structures must allow exposing the root system to the air as much as possible to facilitate the action of contamination removal by the microorganisms.

The exposed surface of the system increases as a result of the system adopting a planar configuration. This system has the advantage that the plants are the ones which naturally maintain the biofilter since they are responsible for safeguarding, with their exudates, the microorganisms which in turn provide simpler nutrients that can be assimilated by the plants. Therefore, the biofilter does not collapse. In this case, the chosen plants will determine the type of contaminant against which they are most effective as a result of their different associated organisms.

Unlike other systems using plants in planar systems, the present invention uses natural substrates allowing the development of the associated microorganisms. It does not involve the use of fertilizers, but rather advises against it in some cases, at least in high amounts, as it interferes with microbial development. It is therefore not a hydroponic system. It also facilitates the passage of air close to the roots and creates a wet environment near said roots for the dissolution of volatile compounds and subsequent degradation. This is achieved by having a hydrophilic fabric enveloping the substrate on all sides except the front. It is specifically developed for biofiltration through the root system, apart from the plant capacity to capture and fix CO₂ promoted by other systems. The system is modular, small structures being able to be made without the system losing its functionality.

Vertical structures like ecological green walls and roofs working like real extensive biofilters can be built with the development of this system. When applied to urban environments and even to sick buildings, this system can extract from the air most of the harmful gas content caused by human activity itself.

Therefore, the object of the invention allows solving the problem of allowing the contact of the air with the rhizosphere where the associated microorganisms can remove the contaminants from the air, of having a three-dimensional structure holding the soil and containing a hydrophilic layer which allows delocalized watering from the rear part without there being any runoff.

### DESCRIPTION OF THE DRAWINGS

To complement the description that is being made and for the purpose of aiding to better understand the features of the invention according to a preferred practical embodiment thereof, a set of drawings is attached as an integral part of said description where the following has been depicted with an illustrative and nonlimiting character.
Figure 1 shows a depiction of a first three-dimensional structure.
Figure 2 shows a second three-dimensional structure along with the first three-dimensional structure.
Figure 3 shows the planar biofiltration system object of the invention in an assembled arrangement.
Figure 4 shows a complementary embodiment.
Figure 5 shows a depiction of the planar system showing what said system looks like when assembled.
Figure 6 shows a depiction of a complementary embodiment in which a series of pockets are secured to the outer face of the first three-dimensional structure.
Figure 7 shows a depiction of the watering means.

### DETAILED DISCLOSURE OF THE INVENTION

A preferred embodiment of the proposed invention is described below in view of the drawings.

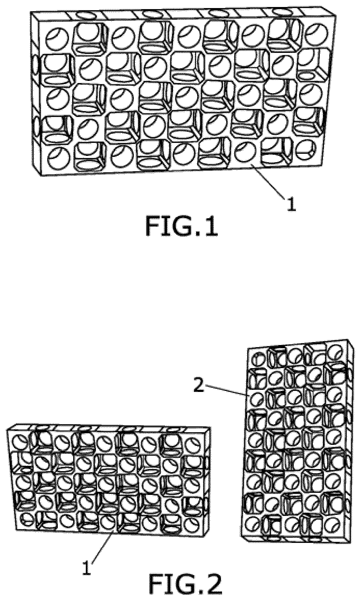

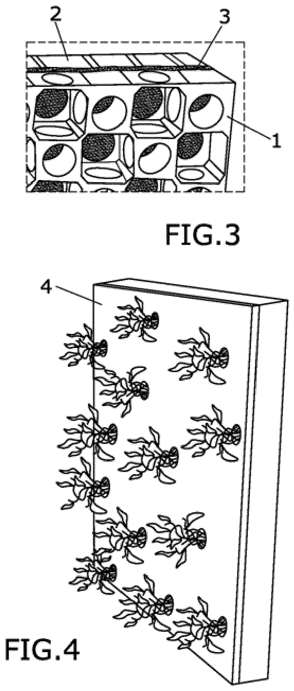

The planar biofiltration system object of the invention comprises a first three-dimensional structure (1), (Figure 1), a second three-dimensional structure (2), (Figure 2), and a hydrophilic fabric (3) arranged such that it covers the base of the first three-dimensional structure (2) and the sides (Figure 3).

The three-dimensional structures (1) and (2) may or may not be the same, but they are characterized by their resistive capacity and the large amount of inner spaces connected with the outside, due to their three-dimensional reticular design. They are made of materials such as polyethylene, polypropylene, or any other stable material.

The hydrophilic fabric (3) is permeable or impermeable, showing a water absorption and distribution capacity that is generally stable and long-lasting under the moisture conditions to which it is subjected.

The first three-dimensional structure (1) is filled with soil or substrate for plant growth. The soil or substrate is held on the side and rear part by the hydrophilic fabric (3) and is suspended or held with a material allowing the passage of air or direct contact with the air through the front part. The special arrangement of the hydrophilic fabric allows keeping the substrate wet without causing saturation in normal watering, so the substrate is prevented from falling.

The second three-dimensional structure (2) is empty. The function of said second three-dimensional structure (2) is to create a gap to prevent moisture from the substrate from spreading to the support of the system. This gap may also be important for purification purposes if the hydrophilic fabric is made permeable. If there were certain contaminants in the air, they may adhere to the wet fabric (3) and from here they may go into the fabric (3) or dissolve in the air traversing the fabric (3) and contacting directly with the bacteria and microorganisms living in the rhizosphere of plants. This empty structure allows creating this free space at all times for air circulation, even though the system is supported on a wall or on the ground. The second three-dimensional structure (2) does not necessarily have to be of the same size and shape as the first structure since it has a different function.

Figure 4 shows a complementary embodiment in which the front part, that opens to the outside, of the first three-dimensional structure (1) is covered by a closure material (4), which can be permeable or impermeable, the preferred choice being a rigid and impermeable material to prevent loss of moisture from the substrate and to force the exchange of gases through the rear part, i.e., the part in contact with the hydrophilic fabric and with the second three-dimensional structure (2).

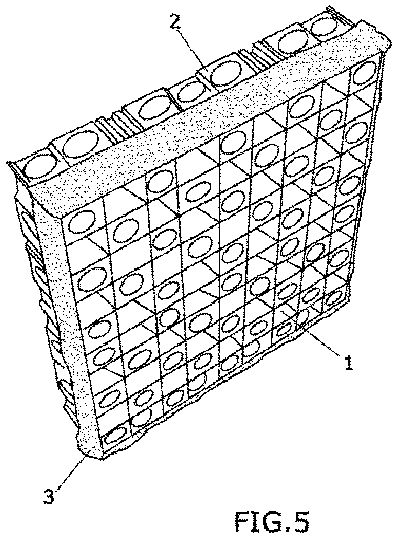

Figure 5 shows the second three-dimensional structure (2) which is empty to facilitate the passage of air and is arranged on the ground or walls to create ventilated plant façades. A hydrophilic fabric (3) is then arranged covering the base and side walls of a first three-dimensional structure (1) internally housing the substrate on which the plants grow.

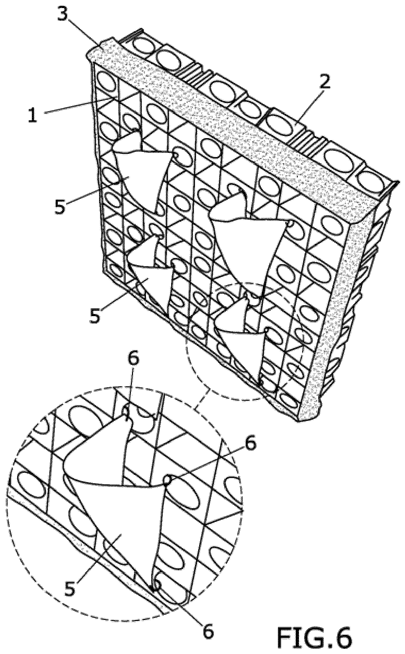

Figure 6 shows how a series of pockets (5) is arranged on the outer face of the first three-dimensional structure suspended from said first structure (1) by means of a series of hooks (6). These pockets (5) serve as means for arranging the plants and facilitating the plants to take root inside the first three-dimensional structure.

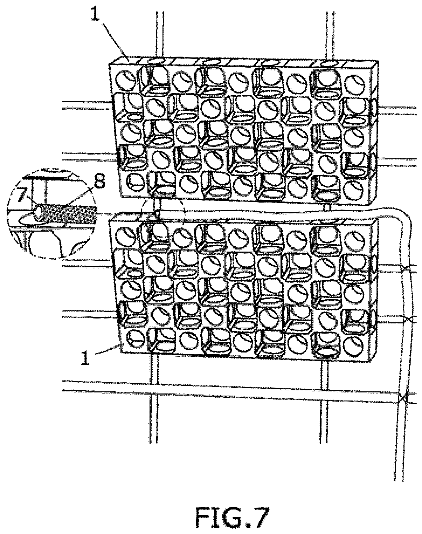

In Figure 7, the system object of the invention is complemented with watering means comprising a watering tube (7) which has been arranged on the side of the three-dimensional structures, formed generally by an exudative fabric (8) having the advantage of producing homogeneous watering throughout the entire length with very little possibilities of becoming plugged up.

It must be pointed out that this Figure 7 shows how the three-dimensional structure (1) is directly secured to a structure formed by profiles or crossbeams secured to a vertical façade or wall, and by vertical struts on which there are hooks for securing the three-dimensional structure (1) in which the substrate is housed and the plants take root, this three-dimensional structure (1) being separated and aerated through its rear face, for securing to the vertical face by means of the support structure.

The hydrophilic fabric (3) waters by capillarity, wetting the system not only vertically but also horizontally, from back to front by capillarity

The width or thickness of the three-dimensional structures varies depending on where they are placed and their weight. The need to have three-dimensional structures that are not too wide must be taken into account so that the air circulates perfectly throughout the entire substrate, so it is determined that the width must not exceed 10 cm, a width of 5 cm being considered ideal as regards weight and functionality for the structure containing soil or substrate.

The ventilation or passage of air through the system can be active or passive. In the case of active or forced ventilation, elements such as fans, turbines or compressors for moving the air must be included in the system.

Therefore as a result of the characteristics of the elements and their design, a planar biofiltration system based on the detoxification capacity of the rhizosphere of plants with the following features is achieved:
- high substrate ventilation
- the substrate promotes microorganism growth
- the outer surface allows the arrangement of different materials and attachments
- modularity
- does not deform with the weight of the soil and plants
- allows using natural substrates and soil
- can be suspended when used as a result of the presence of the hydrophilic fabric
- the structure is divided into two parts with independent functions
- the structure promotes the contact of the air with the roots.

Having sufficiently described the nature of the present invention as well as the manner of putting it into practice, it is hereby stated that within its essential features, it could be carried out to practice in other embodiments differing in detail from that indicated by way of example and such embodiments would be covered by the protection that is sought provided that the fundamental principle thereof is neither altered, changed nor modified.

## Claims

1. A planar biofiltration system **characterized in that** it comprises:
- a first three-dimensional structure (1) that is filled with a substrate.
- a hydrophilic fabric (3) that closes the sides and the base of the first three-dimensional structure (1),
- a second empty three-dimensional structure (2) with support or gripping elements to be secured to a wall or face depending on the subsequent placement thereof, secured to the assembly formed by the first three-dimensional structure (1) and the hydrophilic fabric (3) covering the base and sides of the first three-dimensional structure, that aims to create a gap to prevent moisture from the substrate from spreading to the support of the system,
wherein the first structure (1) and the second structure (2) both are hollow structures leaving several inner spaces allowing, on one hand, the substrate to be arranged inside the first three-dimensional structure (1), whereas, the second structure (2) allows the passage of air allowing the contact of the air with the rhizosphere of the roots where the associated microorganisms can remove the contaminants from the air.

2. The planar biofiltration system according to claim 1, **characterized in that** the three-dimensional structures are made of polyethylene, polypropylene or any other stable material.

3. The planar biofiltration system according to claim 1, **characterized in that** the two three-dimensional structures are attached to one another by means of screws or rivets.

4. The planar biofiltration system according to claim 1, **characterized in that** the front part, that opens to the outside, of the first three-dimensional structure (1) is covered by a closure material (4) .

5. The planar biofiltration system according to claim 4, **characterized in that** the closure material (4) is rigid and impermeable to prevent loss of moisture from the substrate and to force the exchange of gases through the rear part.

6. The planar biofiltration system according to claim 1, **characterized in that** in the front part, that opens to the outside, of the first three-dimensional structure (1) there are arranged pockets (5) suspended from the first three-dimensional structure by means of hooks (6).

7. The planar biofiltration system according to any of the preceding claims, **characterized in that** it has watering means comprising a watering tube (7) formed by an exudative fabric (8).

8. A Vertical garden **characterized in that** it is formed by the claimed planar system.

9. A green roof **characterized in that** it is formed by the claimed planar biofiltration system.

## Patentansprüche

1. Flächiges Biofiltrationssystem, **dadurch gekennzeichnet, dass** es Folgendes umfasst:
- eine erste dreidimensionale Struktur (1), die mit einem Substrat gefüllt ist.
- ein hydrophiles Gewebe (3), das die Seiten und die Basis der ersten dreidimensionalen Struktur (1) verschließt,
- eine zweite leere dreidimensionale Struktur (2) mit Stütz- oder Greifelementen, die abhängig von der nachfolgenden Platzierung davon an einer Wand oder einer Seite zu befestigen sind, die an der Anordnung befestigt ist, die durch die erste dreidimensionale Struktur (1) und das hydrophile Gewebe (3) gebildet wird, das die Basis und die Seiten der ersten dreidimensionale Struktur bedeckt, die darauf abzielt, einen Spalt zu schaffen, um zu verhindern, dass sich Feuchtigkeit von dem Substrat auf die Stütze des Systems ausbreitet,
wobei die erste Struktur (1) und die zweite Struktur (2) beide hohle Strukturen sind, die mehrere Innenräume freilassen, die es einerseits erlauben, dass das Substrat innerhalb der ersten dreidimensionalen Struktur (1) angeordnet ist, während die zweite Struktur (2) den Durchtritt von Luft erlaubt, die den Kontakt der Luft mit der Rhizosphäre der Wurzeln erlaubt, wo die zugeordneten Mikroorganismen die Verunreinigungen aus der Luft entfernen können.

2. Flächiges Biofiltrationssystem nach Anspruch 1, **dadurch gekennzeichnet, dass** die dreidimensionalen Strukturen aus Polyethylen, Polypropylen oder einem anderen stabilen Material hergestellt sind.

3. Flächiges Biofiltrationssystem nach Anspruch 1, **dadurch gekennzeichnet, dass** die zwei dreidimensionalen Strukturen mittels Schrauben oder Nieten aneinander befestigt sind.

4. Flächiges Biofiltrationssystem nach Anspruch 1, **dadurch gekennzeichnet, dass** der sich nach außen öffnende vordere Teil der ersten dreidimensionalen Struktur (1) mit einem Verschlussmaterial (4) bedeckt ist.

5. Flächiges Biofiltrationssystem nach Anspruch 4, **dadurch gekennzeichnet, dass** das Verschlussmaterial (4) starr und undurchlässig ist, um zu verhindern, dass Feuchtigkeit von dem Substrat verloren geht und um den Gasaustausch durch den hinteren Teil zu fördern.

6. Flächiges Biofiltrationssystem nach Anspruch 1, **dadurch gekennzeichnet, dass** in dem sich nach außen öffnenden vorderen Teil der ersten dreidimensionalen Struktur (1) Taschen (5) angeordnet sind, die mittels Haken (6) an der ersten dreidimensionalen Struktur aufgehängt sind.

7. Flächiges Biofiltrationssystem nach einem der vorstehenden Ansprüche, **dadurch gekennzeichnet, dass** es Bewässerungsmittel aufweist, die ein durch ein exsudatives Gewebe (8) gebildetes Bewässerungsrohr (7) umfassen.

8. Vertikaler Garten, **dadurch gekennzeichnet, dass** er durch das beanspruchte flächige System gebildet wird.

9. Grünes Dach, **dadurch gekennzeichnet, dass** es durch das beanspruchte flächige Biofiltrationssystem gebildet wird.

## Revendications

1. Système de biofiltration planaire **caractérisé en ce qu'**il comprend :
- une première structure tridimensionnelle (1) qui est remplie d'un substrat.
- un tissu hydrophile (3) qui ferme les côtés et la base de la première structure tridimensionnelle (1),
- une deuxième structure tridimensionnelle vide (2) avec des éléments de support ou d'accrochage à fixer à une paroi ou face en fonction de son placement ultérieur, fixée à un ensemble constitué de la première structure tridimensionnelle (1) et du tissu hydrophile (3) recouvrant la base et les côtés de la première structure tridimensionnelle, qui vise à créer un espace pour empêcher l'humidité du substrat de se répandre au support du système,
dans lequel la première structure (1) et la deuxième structure (2) sont toutes les deux des structures creuses laissant plusieurs espaces internes permettant, d'une part, au substrat d'être disposé à l'intérieur de la première structure tridimensionnelle (1), tandis que, la deuxième structure (2) permet le passage de l'air permettant le contact de l'air avec la rhizosphère des racines où les microorganismes associés peuvent éliminer les contaminants de l'air.

2. Système de biofiltration planaire selon la revendication 1, **caractérisé en ce que** les structures tridimensionnelles sont constituées de polyéthylène, de polypropylène ou de tout autre matériau stable.

3. Système de biofiltration planaire selon la revendication 1, **caractérisé en ce que** les deux structures tridimensionnelles sont reliées entre elles au moyen de vis ou rivets.

4. Système de biofiltration planaire selon la revendication 1, **caractérisé en ce que** la partie avant, qui s'ouvre à l'extérieur, de la première structure tridimensionnelle (1) est recouverte d'un matériau de fermeture (4).

5. Système de biofiltration planaire selon la revendication 4, **caractérisé en ce que** le matériau de fermeture (4) est rigide et imperméable pour empêcher la perte d'humidité du substrat et pour forcer l'échange de gaz par la partie arrière.

6. Système de biofiltration planaire selon la revendication 1, **caractérisé en ce que** dans la partie avant, qui s'ouvre à l'extérieur, de la première structure tridimensionnelle (1) il y a des poches (5) disposées suspendues à la première structure tridimensionnelle au moyen de crochets (6).

7. Système de biofiltration planaire selon l'une quelconque des revendications précédentes, **caractérisé en ce qu'**il a des moyens d'irrigation comprenant un tube d'irrigation (7) constitué d'un tissu exsudatif (8).

8. Jardin vertical **caractérisé en ce qu'**il est constitué du système planaire revendiqué.

9. Toit vert **caractérisé en ce qu'**il est constitué d'un système de biofiltration planaire revendiqué.
